# EUROPÄISCHE PATENTANMELDUNG

(11) **EP 1 005 115 A1**
(43) Veröffentlichungstag der Anmeldung: **31.05.2000**
(21) Anmeldenummer: 98122519.6
(22) Anmeldetag: 27.11.1998
(51) Int. Cl.: H01R 39/38, H02K 5/14

(54) **Hammerbürstenhalterung mit Kippsicherung**

(71) Anmelder: SIEMENS AKTIENGESELLSCHAFT, 80333 München (DE)
(72) Erfinder: Drexlmaier, Thomas, 97076 Würzburg (DE); Göb, Werner, 97273 Kürnach (DE)

(57) **Zusammenfassung**

Die Hammerbürstenhalter (2) sind mit schalenartigen Lageraufnahmen (2.2;2.3) radial auf Schneiden-Lagerungen (1.2;1.3) eines Motor-Statorteils, insbesondere eines Lagerbügels (1), im Sinne einer Schwenklagerung aufsteckbar; als korrespondierende Kippsicherung gegenüber insbesondere bei Montage und Transport einwirkenden Querkräften greifen die Hammerbürstenhalter (2) mit einem Sicherungs-Zapfen (2.1) in eine Sicherungs-Ausnehmung (1.1) des Motor-Statorteils.

## Beschreibung

Die Erfindung bezieht sich auf eine Hammerbürstenhalterung mit Kippsicherung gemäß Patentansprüche 1.

Durch die DE 28 14 009 C3 bzw. EP 0 791 988 A1 sind Schwenklagerungen für Hammerbürstenhalter bekannt, bei denen die bürstenabgewandten Enden der Kunststoff-Hammerbürstenhalter mit eingeformten schalenartigen Lageraufnahmen in fertigungs- und montagetechnisch einfacher Weise auf korrespondierende Schneiden-Lagerungen eines Motor-Statorteils, insbesondere eines Lagerbügels aufsteckbar und mittels in Ausnehmungen einhängbarer Bürstenandruckfedern im Betriebszustand mit ihren bürstenseitigen Enden an die Lamellenfläche eines Kommutators angedrückt werden; nach einer Ausgestaltung ist bereits eine Schwenklagerung mit in Schwenkachsrichtung jeweils endseitigen Einzelschwenklagern derart vorgesehen, daß der Hammerbürstenhalter durch zwischen den Einzelschwenklagern vorstehende Lagerbügel-Anschläge axial auch formschlüssig lagesicherbar ist.

Gemäß Aufgabe vorliegender Erfindung soll bei Beibehaltung dieses fertigungs- und montagetechnisch vorteilhaften Aufbaus mit einfachen Mitteln eine Kippsicherung gegenüber, insbesondere beim Fertigungs- bzw. Transporthandling, möglichen äußeren Querkräften erreicht werden, aufgrund derer die Gefahr besteht, daß die Bürstenhalter quer zur Schwenkbewegung aus ihrer Schwenklagerung ausgehebelt oder in eine bleibende Kippstellung mit nur mit einer Kante auf der Lamellenfläche des Kommutators aufliegenden Bürste gebracht werden können.

Eine derartige Kippsicherung kann ausgehend von den eingangs als Stand der Technik beschriebenen Hammerbürstenhalterungen unter Beibehaltung des vorteilhaften Konstruktions- und Montageprinzips durch das erfindungsgemäße Zusammenwirken eines Sicherungs-Zapfens an dem Hammerbürstenhalter bzw. dem Motor-Statorteil einerseits und einer korrespondierenden Sicherungs-Ausnehmung an dem Motor-Statorteil bzw. an dem Hammerbürstenhalter andererseits erreicht werden; vorteilhafte Ausgestaltungen der Erfindung sind jeweils Gegenstand der Unteransprüche.

Das Zusammenwirken von Sicherungs-Zapfen einerseits und Sicherungs-Ausnehmung andererseits ist dabei zweckmäßigerweise derart abgestimmt, daß einerseits bei gegenseitiger Betriebsstellung von Hammerbürstenhalter und aufnehmendem Motor-Statorteil eine für einen gegenseitigen Toleranzausgleich unvorteilhafte Positionierungs-Überdimensionierung durch entsprechende gegenseitige kraftschlüssige Berührung vermieden wird, jedoch andererseits bei Beginn einer Kippbewegung des Hammerbürstenhalters schon bei kleinem Kippwinkel durch Anschlag des Sicherungs-Zapfens an die Begrenzung der umschließenden Sicherungs-Ausnehmung eine weitere Kippbewegung gehindert und bei Wegfall der, insbesondere nur während des Einbaus oder Transports auftretenden, die Kippbewegung verursachenden Querkraft der Hammerbürstenhalter und damit die Bürsten in ihre normale Betriebsstellung, vorzugsweise unter dem Zug der Bürstenandruckfeder, rückstellbar sind.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: die radiale Draufsicht auf einen Lagerbügel mit nur einem aufgesteckten Hammerbürstenhalter in normaler Betriebs-Schwenklage;
- FIG 2: die Anordnung gemäß FIG 1 mit zwei Hammerbürstenhaltern in einer durch die erfindungsgemäße Kippsicherung begrenzten Kippstellung;
- FIG 3: eine motorinnere axiale Draufsicht auf die Anordnung gemäß FIG 1 jedoch mit zwei Hammerbürstenhaltern;
- FIG 4: in vergrößerter Ausschnittsdarstellung aus FIG 1 eine herkömmliche Schwenklagerung ohne Kippsicherung;
- FIG 5-8: in vergrößerter Ausschnittsdarstellung aus FIG 1 Schwenklagerungen mit verschiedenen Ausgestaltungen einer erfindungsgemäßen Kippsicherung.

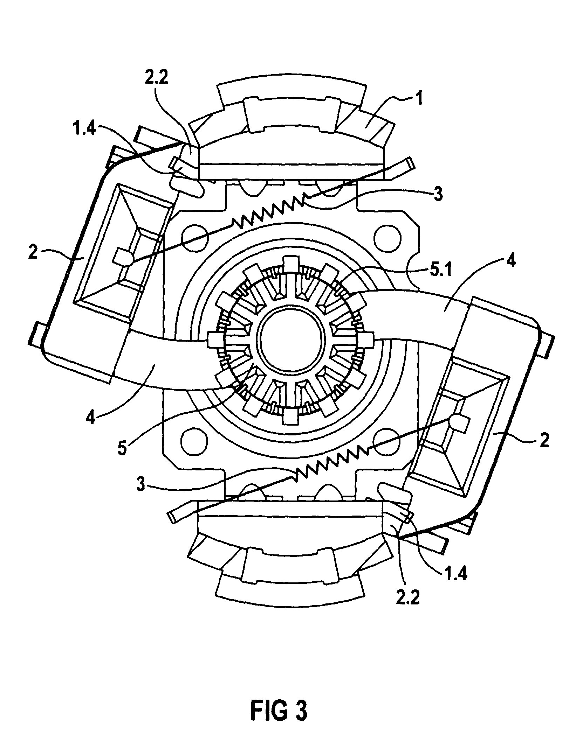

An einem Lagerbügel 1 eines Kommutatormotors sind - wie insbesondere aus FIG 3 ersichtlich - zwei einander radial gegenüberliegende Hammerbürstenhalter 2;2 in einer Schwenklagerung eingehängt und mittels je einer Bürstenandruckfeder 3;3 mit Bürsten 4;4 an ihren der Schwenklagerung abgewandten freien Enden gegen die Lamellenfläche 5.1 eines Kommutators 5 andrückbar.

Zur eigentlichen Schwenklagerung zwischen einem Hammerbürstenhalter 2 einerseits und der Lageraufnahme des Lagerbügels 1 andererseits im Sinne einer montagetechnisch einfachen zusammensteckbaren gegenseitigen Schwenklagerung sind am Lagerbügel 1 zwei axial hintereinanderliegende durch eine Sicherungs-Ausnehmung 1.1 getrennte seitliche Schneidenlagerungen 1.2 bzw.1.3 vorgesehen, auf welche jeweils ein Hammerbürstenhalter 2 mit einer schalenartigen Lageraufnahme 2.2 bzw.2.3 aufsteckbar und durch eine Bürstenandruckfeder 3 an die Lamellenfläche 5.1 andrückbar und dabei zumindest radial lagesicherbar ist.

Obwohl durch eine gewisse Schwenklagerungsreibung aufgrund eines Lagerungsandruckes der Bürstenandruckfeder 3 bereits auch eine zumindest kraftschlüssige axiale Lagesicherung des Hammerbürstenhalters 2 relativ zu dem Lagerbügel 1 gewährleistbar ist, sind nach einer Ausgestaltung der Erfindung zusätzliche, auch formschlüssig lagesichernde, zungenartige vorstehende axiale Anschlagsicherungen 1.4 bzw.1.5 beidseitig außen zu den auf die Schneidenlagerungen 1.2 bzw.1.3 aufgesteckten schalenartigen Lageraufnahmen 2.2 bzw.2.3 vorgesehen.

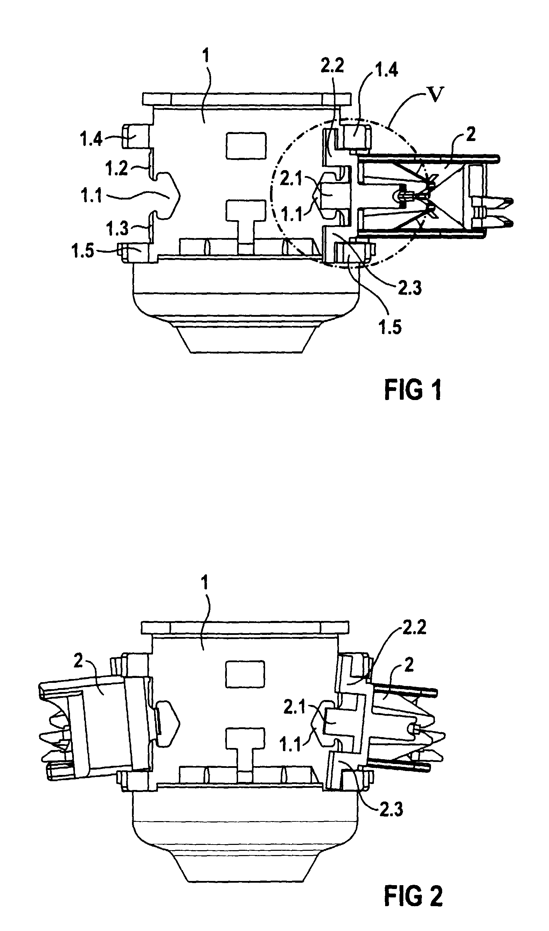

An dem Bürstenhalter 2 ist - gemäß FIG 1-3 bzw.5-7 - ein vorstehender Sicherungs-Zapfen 2.1 vorgesehen, der bei betriebsmäßiger gegenseitiger Schwenklagerung zwischen dem Hammerbürstenhalter 2 und dem Lagerbügel 1 in eine korrespondierende Sicherungs-Ausnehmung 1.1 des Lagerbügels 1 im Sinne einer Kippsicherung des Hammerbürstenhalters 2 entgegen einer im wesentlichen quer zur Schwenkbewegung gewickelten Kippkraft eingreift.

FIG 2 zeigt - ausgehend von einer betriebsmäßigen Normal-Schwenklagerung gemäß FIG 1 - eine leichte, durch Anschlag des Sicherungs-Zapfens 2.1 an die obere Wandung der Sicherungs-Ausnehmung 1.1 begrenzte Kippstellung des Hammerbürstenhalters 2, derart daß dieser nach Wegfall der - insbesondere bei Montage und Transport nur vorübergehend auftretenden - Kippkraft durch die Zugkraft der Bürstenandruckfeder 3 wieder in seine Normal-Schwenklagerung rückstellbar ist; ohne die erfindungsgemäße Kippsicherung bestände Gefahr, daß die Bürstenhalterung in eine solche Kippstellung gebracht werden könnte, daß Gefahr einer dauernden Verkantung zwischen der vom Hammerbürstenhalter 2 aufgenommenen Bürste 4 und der Lamellenfläche 5.1 des Kommutators 5 oder sogar einer totalen seitlichen Aushebelung des Hammerbürstenhalters 2 aus seiner Schwenklagerung bestände.

In vorteilhafter Weise kann bei der erfindungsgemäßen Kippsicherung die einfache Fertigungs- und Montagetechnologie der Steckmontage von Hammerbürstenhalter 2 und Lagerbügel 1 mit einhängbarer Bürstenandruckfeder 3 beibehalten werden; zweckmäßigerweise ist die Sicherungs-Ausnehmung 1.1 als Widerlager für das eine einzuhängende Ende der Bürstenandruckfeder 3 mitausgebildet bzw. mitbenutzt.

Der Sicherungs-Zapfen 2.1 sollte zwar im Sinne einer Verhinderung eines zu großen Kippwinkels des Hammerbürstenhalters 2 der Sicherungs-Ausnehmung 1.1 unter Vermeidung eines zu großen gegenseitigen Kraftschlusses angepaßt sein, jedoch sollte eine Überbestimmung im Sinne eines dann nicht möglichen gegenseitigen betriebsmäßigen Toleranzausgleiches der miteinander zusammenzubauenden Bauteile vermieden sein.

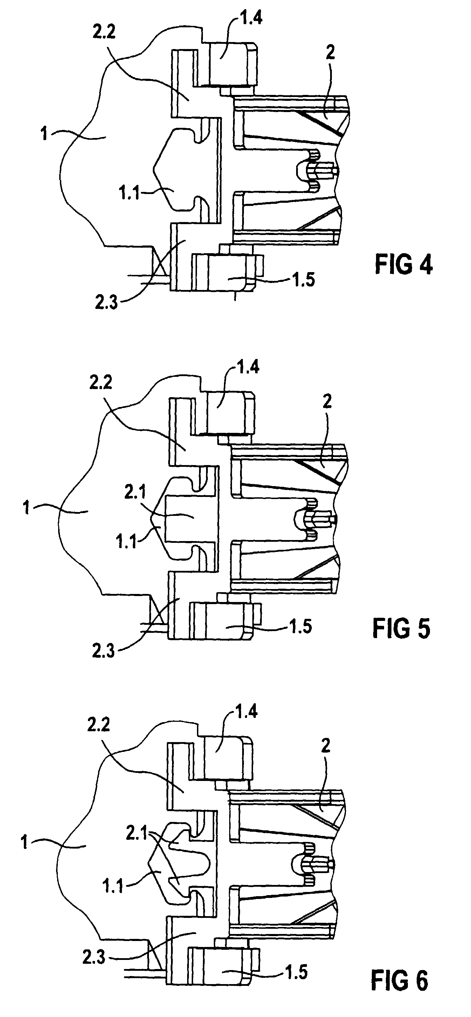

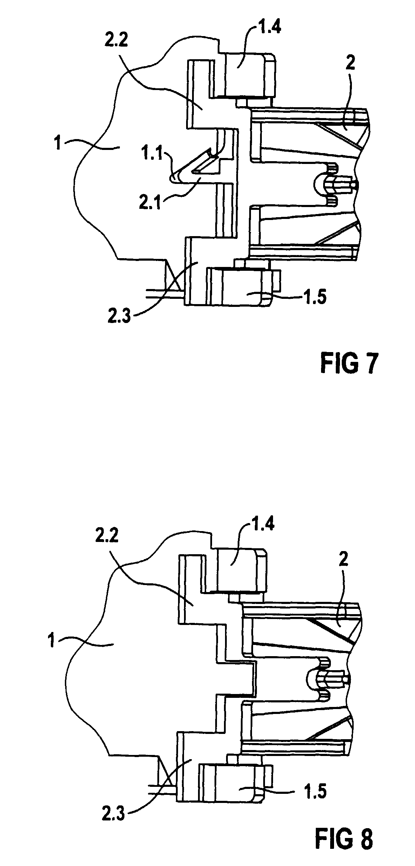

Die vergrößerten Einzeldarstellungen gemäß FIG 5 bis 7 zeigen ausgehend von einer bekannten Schwenklagerung ohne Kippsicherung gemäß FIG 4 einen betriebsmäßig kraftfreien Eingriff eines Sicherungs-Zapfens 2.1 am Hammerbürstenhalter 2 in eine Sicherungs-Ausnehmung 1.1 an einem Lagerbügel 1. FIG 8 zeigt die kinematische Umkehr mit Eingriff eines Sicherungs-Zapfens eines Lagerbügels 1 in eine Sicherungs-Ausnehmung des Hammerbürstenhalters 2; FIG 6;7 zeigen zwei Ausführungsbeispiele eines formschlüssigen, vorzugsweise federnd, verrastbaren Eingriffs eines Sicherungs-Zapfens 2.1 an Hammerbürstenhalter in eine Sicherungs-Ausnehmung 1.1 mit Rast-Hinterschnitt an Lagerbügel 1.

Die Sicherungsöffnung 1.1 bzw. die Schneidenlagerungen 1.2;1.3 bzw. die Anschlagsicherungen 1.4;1.5 sind in fertigungstechnisch vorteilhafter Weise als einstückige Stanzbiegeteile des metallenen Lagerbügels 1 ausgeführt; der Sicherungs-Zapfen 2.1 sowie die schalenartigen Lageraufnahmen 2.2;2.3 sind zweckmäßigerweise einstückige, an- bzw. eingeformte, insbesondere an- bzw. eingespritzte Bestandteile eines, insbesondere als Spritzgußteil hergestellten, Kunststoff-Bürstenhalters 2.

## Patentansprüche

1. Hammerbürstenhalterung mit Kippsicherung
- mit einer Schwenklagerung eines Hammerbürstenhalters (2) an einem Motor-Statorteil, insbesondere einem Lagerbügel (1);
- mit jeweils zumindest einer schalenartigen Lageraufnahme (2.2;2.3) am bürstenabgewandten Bürstenhalterende bzw. an dem Motor-Statorteil, die schwenkbar auf zumindest eine korrespondierende Schneidenlagerung (1.2;1.3) des Motor-Statorteils bzw. des Hammerbürstenhalters aufsteckbar ist;
- mit einem vorstehenden Sicherungs-Zapfen (2.1) an dem Hammerbürstenhalter bzw. an dem Motor-Statorteil, der bei deren gegenseitiger Betriebsstellung in eine korrespondierende Sicherungs-Ausnehmung (1.1) des Motor-Statorteils bzw. des Hammerbürstenhalters im Sinne einer Kippsicherung des Hammerbürstenhalters entgegen einer im wesentlichen quer zur Schwenkbewegung gerichteten Kippkraft eingreift.

2. Hammerbürstenhalterung nach Anspruch 1
- mit einer axialen Anschlagsicherung (1.4;1.5) der Schneidenlagerung.

3. Hammerbürstenhalterung nach Anspruch 1 und/oder 2
- mit einer Anordnung des Sicherungszapfens (2.1) zwischen jeweils in Schwenkachsrichtung beidseitiger Schwenklagerung (1.2;2.2 bzw. 1.3;2.3).

4. Hammerbürstenhalterung nach zumindest einem der Ansprüche 1-3
- mit einer, insbesondere einstückigen, Anformung des Sicherungszapfens (2.1) an den Hammerbürstenhalter (2).

5. Hammerbürstenhalterung nach Anspruch 4
- mit einem Kunststoff-Hammerbürstenhalter (2) und mit einstückig angeformtem, insbesondere angespritztem, sicherungszapfen (2.1).

6. Hammerbürstenhalterung nach Anspruch 4 und/oder 5
- mit einer Anordnung der zu dem Sicherungs-Zapfen (2.1) korrespondierenden Sicherungs-Ausnehmung (1.1) in dem Motor-Statorteil, insbesondere als Ausstanz-Ausnehmung.

7. Hammerbürstenhalterung nach zumindest einem der Ansprüche 1-6
- mit einer Mitbenutzung der statorseitigen Sicherungs-Ausnehmung (1.1) als Widerlager für eine Bürstenandruckfeder (3).

8. Hammerbürstenhalterung nach zumindest einem der Ansprüche 1-7
- mit einer Anordnung der zumindest einen schalenartigen Lageraufnahme (2.2;2.3) als Teil des Hammerbürstenhalters (2);
- mit einer Anordnung der zumindest einen korrespondierenden Schneidenlagerung (1.2;1.3) als Teil des Motor-Statorteils, insbesondere des Lagerbügels (1).

9. Hammerbürstenhalterung nach zumindest einem der Ansprüche 1-8
- mit einer Ausbildung des Sicherungs-Zapfens (2.1) bzw. der korrespondierenden Sicherungs-Ausnehmung (1.1) im Sinne einer betriebsmäßig gewährleisteten Toleranzausgleichs-Bewegung zwischen der schalenförmigen Lageraufnahme (2.2;2.3) einerseits und der korrespondierenden Schneidenlagerung (1.2;1.3) andererseits.

10. Hammerbürstenhalterung nach zumindest einem der Ansprüche 1-9
- mit einer Ausbildung des Sicherungs-Zapfens (2.1) bzw. der korrespondierenden Sicherungs-Ausnehmung (1.1) im Sinne einer betriebsmäßig gegenseitig formschlüssigen, insbesondere verrastbaren Einsteckverbindung.
